# EUROPÄISCHE PATENTSCHRIFT

(11) **EP 2 013 052 B1**
(45) Veröffentlichungstag und Bekanntmachung des Hinweises auf die Patenterteilung: **02.03.2011**
(21) Anmeldenummer: 06818086.8
(22) Anmeldetag: 22.11.2006
(51) Int. Cl.: B60K 31/00

(54) **VERFAHREN ZUR GESCHWINDIGKEITSREGELUNG EINES FAHRZEUGS IN EINER KOMPLEXEN VERKEHRSSITUATION**
METHOD FOR SPEED REGULATION OF A MOTOR VEHICLE IN A COMPLEX TRAFFIC SITUATION
PROCÉDÉ DE RÉGULATION DE VITESSE D'UN VÉHICULE DANS UNE SITUATION DE CIRCULATIONC COMPLEXE

(30) Priorität: 03.05.2006 DE 102006020788
(43) Veröffentlichungstag der Anmeldung: 14.01.2009
(73) Patentinhaber: ADC Automotive Distance Control Systems GmbH, 88131 Lindau (DE)
(72) Erfinder: THIEL, Robert, 01705 Freital (DE)
(86) Internationale Anmeldenummer: PCT/DE2006/002055
(87) Internationale Veröffentlichungsnummer: WO 2007/124704

(56) Entgegenhaltungen:
- EP-A1- 1 455 323
- EP-A2- 1 504 948
- WO-A-03/031217
- WO-A-2004/045890
- DE-A1- 10 311 192
- US-B1- 6 282 483

## Beschreibung

Die Erfindung betrifft ein Verfahren zur Geschwindigkeitsregelung von Fahrzeugen in einer komplexen Verkehrssituation. Ein solches Verfahren ist z. B. in Kraftfahrzeugen anwendbar, die mit ACC (Adaptive Cruise Control) ausgestattet sind.

In marktüblichen Abstandsregelungssystemen für Kraftfahrzeuge wie ACC wird das direkt voraüsfahrende Objekt für die Regelungs- und Wamungsfunktionen des ACC ausgewählt. Mit dieser Regelung werden komplexe Verkehrssituationen, insbesondere bei mehrspuriger Verkehrsführung, nicht ausreichend gut genug erfasst und ein Fahrereingriff ist trotz ACC notwendig oder das Beschleunigungsverhalten des ACC Fahrzeugs wird vom Fahrer als unangenehm, da nicht vorausschauend, empfunden. Im Folgenden werden einige komplexe Verkehrssituationen und das Verhalten eines regulären Abstandsregelsystems dargestellt:
o Ein Fahrzeug / Objekte schert sehr knapp vor dem ACC Fahrzeug von der Nachbarspur ein. Erst nachdem der Einschervorgang abgeschlossen ist, wird die Beschleunigung des ACC Fahrzeugs dem mit geringem Abstand vorausfahrende Objekt angepasst. Da die Stärke eines Bremseingriffs beim ACC limitiert ist, ist hier ggf. ein Fahrereingriff notwendig, um ein Auffahren zu verhindern.
o Das ACC Fahrzeug wechselt selbst die Pur, um einem langsameres vorausfahrendes Objekt zu überholen. Auf der Zielspur befindet sich kein Objekt, aber das ACC Fahrzeug beschleunigt erst dann auf eine vorgegebene Geschwindigkeit, wenn der Spurwechsel vollzogen ist. Dieses Beschleunigungsverhalten wird vom Fahrer häufig als ruckartig empfunden.
o Beim Spurwechsel des ACC Fahrzeugs wird das Fahrzeug auf der Zielspur erst dann für die Regelung berücksichtigt, wenn der Spurwechsel vollzogen ist. Dadurch wird unter Umständen für eine kurze Zeit kein Objekt als relevant betrachtet.
o Wenn ein Objekt, das vom vorausfahrenden Objekt verdeckt wird, stark verzögert, wird dies nicht für die Beschleunigungsregelung des ACC Fahrzeugs berücksichtigt, auch wenn absehbar ist, dass das direkt vorausfahrende Objekt ebenso abbremsen wird. Hier reicht u. U. ein Bremseingriff des ACC zu dem Zeitpunkt, wenn auch das vorausfahrende Fahrzeug bremst, nicht mehr aus.
o Bei einem Spurwechsel des vorausfahrenden Fahrzeugs, wird das verdeckte Objekt vor dem vorausfahrenden Fahrzeugs erst dann berücksichtigt, wenn der Spurwechsel abgeschlossen ist. Das hat zur Folge, dass ggf. zunächst mit dem ausscherenden vorausfahrenden Fahrzeug beschleunigt wird und nach dem Ausscheren desselben wieder verzögert wird, wenn nun eine Beschleunigungsregelung auf das zuvor verdeckte Fahrzeug eintritt.

Aus der DE10311192A1 geht eine Geschwindigkeitsregelung eines Kraftfahrzeugs hervor, bei der einem Geschwindigkeitsregler Objektmesswerte für bekannte Objekte zugerführt werden. Der Regel umfasst ein Rechenmittel, das für jeden Messwert eines jeden Objekts einen Beschleunigungsgradienten bestimmt, und addiert für jedes Objekt die einzelnen Beschleunigungsgradienten der Messwerte und gibt den addierten Beschleunigungsgradienten für das als Zielobjekt ausgewählte Objekt aus.

Die US6,282,483 offenbart eine Geschwindigkeitsregelung, bei der für vorausfahrende Fahrzeuge jeweils ein sicheres Beschleunigen und Bremsen basierend auf dem Abstand zwischen dem eigenen Fahrzeug und einem vorausfahrenden Fahrzeug ermittelt und davon abhängig das vorausfahrende Fahrzeug für die Geschwindigkeitsregelung ausgewählt wird, für welches das Risiko einer Kollision am größten ist.

Die WO03/031217A betrifft einen Geschwindigkeitsregler mit Abstandsregelfunktion für Kraftfahrzeuge, mit, einem Ortungssystem zur Erfassung von Ortungsdaten für Objekte, die sich vor dem Fahrzeug befinden, und mit einer Auswerteeinrichtung zur Entscheidung, ob ein geortetes Objekt als relevantes Zielobjekt auf der eigenen Fahrspur zu behandeln ist.

Die EP1455323A1 offenbart ein Geschwindigkeitsregelsystem, das aus zwei vorausfahrenden Fahrzeugen ein Fahrzeug als Folge-Fahrzeug auswählt und davon abhängig die Beschleunigung des eigenen Fahrzeugs steuert. Das System erkennt vier unterschiedliche Zustände. Abhängig vom erkannten Zustand wird das Folge-Fahrzeug, das für die Regelung der Beschleunigung des eigenen Fahrzeugs verwendet wird, bestimmt und die Beschleunigung des eigenen Fahrzeugs eingestellt.

Die EP1504948A2 betrifft eine Vorrichtung zur adaptiven Geschwindigkeitsregelung für Kraftfahrzeuge, mit einem Ortungssystem zur Ortung vorausfahrender Fahrzeuge und einem Regler zur Regelung der Geschwindigkeit auf eine Richtgeschwindigkeit oder auf einen Sollabstand zu einem vorausfahrenden Fahrzeug. Das Zielobjekt für eine Geschwindigkeitsregelung wird auch bei einer Überschreitung einer Richtgeschwindigkeit automatisch weiterverfolgt. Das Zielobjekt bleibt bei diesem System auch bei einem Spurwechsel ausgewählt und geht nicht verloren.

Das gattungsbildende Dokument WO2004/045890A offenbart ein System zur Auswertung der Fahrzeugumgebung eines KFZs und zur Beeinflussung der Geschwindigkeit des KFZs in der eigenen Fahrspur. Eine elektronische Steuereinheit des Systems erkennt einen Spurwechsel des eigenen KFZs, wenn die Änderung des Winkelversatzes oder der Seitenablage des Ziel-Kraftfahrzeuges, von dessen Fahrverhalten das Fahrverhalten des eigenen KFZs abhängig sein soll, relativ zur Fahrzeuglängsachse des eigenen KFZs über einem bestimmten Schwellenwert und im wesentlichen gleich der Drehrate des eigenen KFZs mit inversem Vorzeichen ist.

Aufgabe der Erfindung ist es daher, ein Verfahren zur Geschwindigkeitsregelung anzugeben, dass auch in komplexen Verkehrssituationen in der Lage ist, die Längsgeschwindigkeit eines Fahrzeugs sicher und in vorausschauender Weise zu regeln.

Diese Aufgabe ist erfindungsgemäß gelöst durch ein Verfahren und Vorrichtung gemäß den unabhängigen Patentansprüchen. Vorteilhafte Weiterbildungen sind den Unteransprüchen zu entnehmen.

Es wird ein Verfahren zur Geschwindigkeitsregelung eines Fahrzeugs in einer komplexen Verkehrssituation angegeben, wobei da Fahrzeug mit einem Sensorsystem ausgestattet ist, das vorzugsweise auf eine Fahrzeugumgebung in Fahrtrichtung vor dem Fahrzeug ausgerichtet ist. Dieses Fahrzeug wird im Folgenden eigenes Fahrzeug genannt. Für die Regelung wird nicht nur ein direkt vorausfahrendes Objekt -wenn vorhanden- betrachtet, sondern zur Beurteilung der Verkehrssituation wird zumindest ein weiteres Objekt betrachtet. Es werden zumindest teilweise verdeckte Objekte und / oder zumindest ein Objekt auf einer benachbarten Fahrspur mit dem Sensorsystem erkannt und für die Geschwindigkeitsregelung berücksichtigt. Als zumindest teilweise verdeckt werden in dieser Schrift Objekte bezeichnet, die nicht direkt benachbart zum eigenen Fahrzeug sind, d. h. es befindet sich eine weiteres Objekt zwischen dem verdeckten Objekt und dem eigenen Fahrzeug und verdeckt das Objekt zumindest teilweise. Dies gilt z. B. für ein Objekt auf der gleichen Fahrspur, das sich in Fahrtrichtung vor einem direkt vorausfahrenden Objekt befindet, oder ein Objekt auf einer Nachbarfahrspur, das von einem weiteren Objekt auf der eigenen oder der Nachbarfahrspur verdeckt wird. Es hängt von der Art des Sensors ab, inwieweit zumindest teilweise verdeckte Objekte erkannt werden. Das Detektionsverhalten bezüglich verdeckter Objekte von Kamera- und Infrarot-basierten Sensoren entspricht ungefähr dem des menschlichen Auges. Objekte werden dann noch wahrgenommen, wenn Sie nur teilweise von einem anderen Objekt verdeckt werden. Andere Sensoren, insbesondere Radarsensoren, können auch für das menschliche Auge unsichtbare, verdeckte Objekte detektieren. Ein Teil der emittierten Radarstrahlung wird an der Fahrbahn reflektiert und "kriecht" unter einem vorausfahrende Objekt (Fahrzeug) hindurch und wird an dem Objekt vor dem vorausfahrenden Fahrzeug reflektiert. Das für das menschliche Auge unsichtbare, verdeckte Objekt kann also von einem Radarsensor detektiert werden.

In einer bevorzugten Ausgestaltung der Erfindung wird eine Spurwechselabsicht des eigenen Fahrzeugs und / oder eines Objekts erfasst. Die Spurwechselabsicht kann z. B. anhand der Quergeschwindigkeit von Objekten festgestellt werden. Beim eigenen Fahrzeug kann die Blinkeraktivität und / oder ein Lenkwinkel größer als ein vorgegebener Wert als Hinweis auf eine Spurwechselabsicht herangezogen werden. Mit einem geeigneten Sensor z. B. einem Kamerasensor kann auch die Blinkeraktivität eines Objekts überwacht und daraus eine Fahrerabsicht abgeleitet werden, die Fahrspur zu wechseln.

In einer vorteilhaften Ausgestaltung der Erfindung wird auch die Querablage des Objekts oder des eigenen Fahrzeugs berücksichtigt, um die Wahrscheinlichkeit eines beabsichtigten Spurwechsels zu bestimmen. Die Querablage ist ein Maß dafür, wo sich eine Objekt bzw. ein Fahrzeug auf der Fahrspur befindet. Bewegt sich ein Objekt oder ein Fahrzeug sehr weit rechts auf der Fahrspur und weist zudem eine Quergeschwindigkeit nach links auf, so kann entweder eine Korrektur der Position auf der aktuellen Fahrspur beabsichtigt sein oder ein Spurwechsel auf die linke Nachbarfahrspur. Befindet sich das Objekt bzw. Fahrzeug hingegen bereits sehr weit links auf der Fahrspur und weist zudem eine Quergeschwindigkeit nach links auf, wird mit einer höheren Wahrscheinlichkeit angenommen, dass ein Wechsel auf die linke Fahrspur beabsichtigt ist. Ein weiterer Indikator für die Wahrscheinlichkeit eines beabsichtigten Spurwechsels ist die Quergeschwindigkeit bzw. Querbeschleunigung des Objekts oder des Fahrzeugs und eine Blinkeraktivität.

In einer bevorzugten Ausgestaltung der Erfindung wird die Absicht eines Fahrspurwechsels mit mehr als zwei Zuständen (Fahrspurwechsel bzw. kein Fahrspurwechsel) angegeben. Es sind z. B. zumindest drei diskrete Zustände (Fahrspurwechsel bzw. möglicher Fahrspurwechsel bzw. kein Fahrspurwechsel) vorgesehen oder eine kontinuierliche Wahrscheinlichkeitsangabe eines zukünftig eintretenden Fahrspurwechsels z. B. in Prozent. Die Spurwechselabsicht ist ein Indikator dafür, wann ein Objekt auf einer Nachbarspur relevant für das eigene Fahrzeug wird.

In einer vorteilhaften Ausgestaltung der Erfindung wird zumindest einem Objekt, eine Sollbeschleunigung in Abhängigkeit von zumindest Abstand und Relativgeschwindigkeit des Objekts zum Fahrzeug zugewiesen. In einer besonderen Ausführungsform können weitere Parameter zur Berechnung der Sollbeschleunigung beitragen. Die Sollbeschleunigung gibt an, wie die aktuelle Geschwindigkeit des eigenen Fahrzeugs im Rahmen der Randbedingungen (z. B. gesetzte Höchstgeschwindigkeit, limitierte Stärke eines Bremseingriffs bzw. einer Beschleunigung) verändert wird, wenn das Fahrzeug genau diesem Objekt folgt. Ein Bremseingriff entspricht einer negativen und eine Beschleunigung des Fahrzeugs entspricht einer positiven Sollbeschleunigung. Ist keine Korrektur der Fahrzeuggeschwindigkeit notwendig, dann ist die Sollbeschleunigung gleich Null.

In einer bevorzugten Ausgestaltung der Erfindung wird Objekten ein unterer Schwellwert für eine Sollbeschleunigung zugeordnet. Der Schwellwert ist abhängig davon, ob das Objekt verdeckt ist und / oder ob das Objekt auf der eigenen oder einer benachbarten Fahrspur ist und / oder ob eine erkennbare Absicht des Fahrzeugs oder des Objekts vorliegt, die Fahrspur zu wechseln.

In einer besonderen Ausgestaltung der Erfindung wird für die Bestimmung des unteren Schwellwertes für die Sollbeschleunigung auch die Sicherheit betrachtet, mit der ein erfasstes stehendes Objekt ein relevantes Objekt, z. B. ein Fahrzeug, ist. Nichtrelevante Objekte sind z. B. Objekte zur Fahrbabnbegrenzung. Diese Klassifikation kann z. B. durch ein Kamerasystem mit Objekterkennungsfunktion vorgenommen werden. Ein Radarsystem mit Ortsauflösung, kann anhand der Breiten- und Längeninformätion ein Objekt z.B. Fahrzeug klassifizieren.

In einer vorteilhaften Ausgestaltung des Verfahrens wird das Objekt mit der kleinsten bzw. negativsten Sollbeschleunigung als das Objekt mit der höchsten Relevanz bewertet und die Geschwindigkeitsregelung auf das Objekt mit der höchsten Relevanz erfolgt.

Die Erfindung wird nachfolgend anhand von Ausführungsbeispielen näher erläutert.

Der Schwellwert für die untere Sollbeschleunigung eines Objekts wird im folgenden Text als S_SB bezeichnet. Die Sollbeschleunigung, die einem Objekt zugeordnet wird, ist ein Maß dafür, wie die aktuelle Geschwindigkeit des eigenen Fahrzeugs im Rahmen der vorgegebenen Randbedingungen verändert wird, wenn das Fahrzeug genau diesem Objekt folgt.

In einem ersten Ausführungsbeispiel schert ein Objekt sehr knapp vor dem eigenen Fahrzeug von der Nachbarspur ein. Die Absicht zum Spurwechsel Einscherpotential wird anhand der Stärke der Quergeschwindigkeit des Objekts und / oder der Querablage zur eigenen Fahrspur erkannt. Der Schwellwert S_SB des einscherenden Objekts wird daraufhin entsprechend verringert. Ist die Sollbeschleunigung für das einscherende Objekt nun aufgrund des neuen S_SB geringer als die des direkt vorausfahrenden Objekts, so wird das einscherende Objekt das Objekt mit höchster Relevanz. Es wird bei einem negativen S_SB ein Bremseingriff vorgenommen, um dem einscherenden Objekt mit einem sicheren Abstand zu folgen.

In einem weiteren Ausführungsbeispiel wechselt das eigene Fahrzeug mit Überholabsicht die Fahrspur. Die Spurwechselabsicht wird anhand des Lenkwinkels und des aktiven Blinkers erkannt. Der Schwellwert S_SB für das Objekt, das überholt werden soll, wird erhöht. Auf der Zielspur befindet sich kein Objekt, d. h. das eigene Fahrzeug würde hier auf die vorgegebene Wunsch- bzw. Höchstgeschwindigkeit mit eine maximal zugelassenen Wert beschleunigt. In diesem Fall wird i. d. R. der erhöhte Schwellwert S_SB für das Objekt, das überholt werden soll, der kleinste Sollbeschleunigungswert sein und das Fahrzeug wird beschleunigt bzw. weniger stark verzögert.

In einem weiteren Ausführungsbeispiel wechselt das eigene Fahrzeug mit Überholabsicht die Fahrspur. Der Schwellwert S_SB für das Objekt, das überholt werden soll, wird erhöht. Auf der Zielspur befindet sich ein Objekt, dessen Schwellwert S_SB verringert wird. Wenn das Objekt auf der Fahrspur, auf die gewechselt wird, eine höhere Geschwindigkeit hat als das vorausfahrende Objekt, wird auch hier weiterhin auf das Objekt auf der alten Fahrspur, aber mit dem erhöhten Schwellwert S_SB, geregelt. In einem weiteren Ausführungsbeispiel wird ein Objekt, das vom vorausfahrenden Objekt verdeckt wird, z. B. durch eine Stauende stark verzögert. Die Sollbeschleunigung für dieses Objekt wird geringer und nähert sich dem Schwellwert S_SB an. Unterschreitet die Sollbeschleunigung des verdeckten Objekts die Sollbeschleunigung des direkt vorausfahrenden Objekts, das noch keine Bremsung eingeleitet hat, wird die Sollbeschleunigung des verdeckten Objekts bestimmend für die Geschwindigkeitsregelung übernommen.

In einem weiteren Ausführungsbeispiel wechselt das vorausfahrendes Objekt die Fahrspur, um ein ihm vorausfahrendes Objekt zu überholen. Dabei wird die Sollbeschleunigung auf das zum Fahrzeug mit Überholabsicht positiv, da das eigene Fahrzeug mitbeschleunigen will. Die Sollbeschleunigung auf das vor diesem Objekt fahrende Fahrzeug bleibt jedoch gleich und liegt unterhalb der des Fahrzeugs mit Überholabsicht. Das verdeckte Objekt wird zum Objekt mit höchster Relevanz und bestimmt die Geschwindigkeitsregelung des Fahrzeugs.

## Patentansprüche

1. Verfahren zur Geschwindigkeitsregelung eines Fahrzeugs in einer komplexen Verkehrssituation, wobei das Fahrzeug mit einem Sensorsystem zur Umgebungserfassung ausgestattet ist,
wobei für die Regelung ein zumindest teilweise verdecktes Objekt und / oder zumindest ein Objekt auf einer benachbarten Fahrspur betrachtet wird,
eine Spurwechselabsicht des eigenen Fahrzeugs und / oder eines Objekts erfasst wird, wobei Objekten ein unterer Schwellwert für eine Sollbeschleunigung zugeordnet wird, **dadurch gekennzeichnet, dass**
der Schwellwert davon abhängt, ob
o das Objekt verdeckt ist und
o das Objekt auf der eigenen oder einer benachbarten Fahrspur ist und
o eine erkennbare Absicht des Fahrzeugs oder des Objekts vorliegt, die Fahrspur zu wechseln.

2. Verfahren nach Anspruch 1,
**dadurch gekennzeichnet, dass**
für die Bestimmung des unteren Schwellwerts für die Sollbeschleunigung auch die Sicherheit betrachtet wird, mit der ein erfasstes stehendes Objekt ein relevantes Objekt ist.

3. Verfahren nach einem der vorherigen Ansprüche,
**dadurch gekennzeichnet, dass**
mehr als zwei Zustände vorgesehen sind, um die Spurwechselabsicht zu beschreiben.

4. Verfahren nach Anspruch 3,
**dadurch gekennzeichnet, dass**
eine kontinuierliche Wahrscheinlichkeitsangabe eines zukünftig eintretenden Fahrspurwechsels vorgesehen ist.

5. Verfahren nach einem der vorherigen Ansprüche,
**dadurch gekennzeichnet, dass**
als Hinweis auf eine Spurwechselabsicht beim eigenen Fahrzeug eine Blinkeraktivität herangezogen wird.

6. Verfahren nach einem der vorherigen Ansprüche,
**dadurch gekennzeichnet, dass**
mit einem Kamerasensor die Blinkeraktivität eines Objekts überwacht wird und daraus eine Absicht des Fahrers dieses Objekts abgeleitet wird, die Fahrspur zu wechseln.

7. Verfahren nach einem der vorherigen Ansprüche,
**dadurch gekennzeichnet, dass**
zumindest einem Objekt eine Sollbeschleunigung zugewiesen wird, wobei die Sollbeschleunigung in Abhängigkeit von Abstand und Relativgeschwindigkeit zum Fahrzeug bestimmt wird.

8. Verfahren nach einem der vorherigen Ansprüche,
**dadurch gekennzeichnet, dass**
das Objekt mit der kleinsten bzw. negativsten Sollbeschleunigung als das Objekt mit der höchsten Relevanz bewertet wird und die Regelung auf das Objekt mit der höchsten Relevanz erfolgt.

9. Kraftfahrzeug mit einem Fahrerassistenzsystem zur adaptiven Regelung der Längsgeschwindigkeit, wobei die Regelung ein Verfahren nach einem der Ansprüche 1-8 umfasst.

## Claims

1. A method for controlling the speed of a vehicle in a complex traffic situation, wherein the vehicle is equipped with a sensor system for recording the surroundings,
wherein for the purpose of said control, an object which is at least partially hidden and/or at least one object on an adjacent traffic lane is observed,
an intention to change lanes of the own vehicle and/or of an object is detected,
wherein a lower threshold value for a nominal acceleration is assigned to said objects, **characterized in that**
the threshold value depends on whether
° the object is hidden, and
° the object is on the own or on an adjacent traffic lane, and
° there is a detectable intention of the vehicle or the object to change lanes.

2. A method according to claim 1,
**characterized in that**
the lower threshold value for the nominal acceleration is determined taking into account the degree of certainty that a stationary object which has been detected is a relevant object.

3. A method according to any one of the preceding claims,
**characterized in that**
there are more than two conditions which serve to describe the intention to change lanes.

4. A method according to claim 3,
**characterized in that** there is a continuous indication of the probability of a future change of traffic lanes.

5. A method according to any one of the preceding claims,
**characterized in that**
an indicator activity is used as an indication of an intention of the own vehicle to change lanes.

6. A method according to any one of the preceding claims,
**characterized in that**
a camera sensor is used to monitor the indicator activity of an object, and an intention of the driver of said object to change traffic lanes is inferred from said indicator activity.

7. A method according to any one of the preceding claims,
**characterized in that**
a nominal acceleration is assigned to at least one object, wherein said nominal acceleration is determined dependent on the distance from and the relative velocity with respect to the vehicle.

8. A method according to any one of the preceding claims,
**characterized in that**
the object having the smallest or most negative nominal acceleration is judged to be the most relevant object, and control is performed with reference to said most relevant object.

9. A motor vehicle including a driver assistance system for the adaptive control of the longitudinal velocity, wherein said control comprises a method according to any one of claims 1-8.

## Revendications

1. Procédé de régulation de la vitesse d'un véhicule dans une situation de trafic complexe, le véhicule étant équipé d'un système de capteur pour la détection ambiante,
un objet au moins partiellement caché et/ou au moins un objet sur une voie de circulation voisine étant considéré pour la régulation,
une intention de changement de voie du propre véhicule et/ou d'un objet étant détectée,
une valeur de seuil inférieure pour une accélération de consigne étant affectée à des objets, **caractérisé en ce que**
la valeur de seuil dépend de savoir si
° l'objet est masqué et
° si l'objet est sur la propre voie de circulation ou sur une voie de circulation voisine et
° s'il existe une intention décelable de la part du véhicule ou de l'objet de changer de voie de circulation.

2. Procédé selon la revendication 1,
**caractérisé en ce que**,
pour la détermination de la valeur de seuil inférieure pour l'accélération de consigne, il est également considéré la sécurité avec laquelle un objet en présence détecté est un objet pertinent.

3. Procédé selon une des revendications précédentes,
**caractérisé en ce**
**qu'**il est prévu plus de deux états pour décrire l'intention de changer de voie.

4. Procédé selon la revendication 3,
**caractérisé en ce**
**qu'**il est prévu une indication continue de probabilité d'une future intention de changement de voie de circulation.

5. Procédé selon une des revendications précédentes,
**caractérisé en ce que**,
comme indication d'une intention de changement de voie dans le cas du propre véhicule, il est fait appel à une activité de clignotant.

6. Procédé selon une des revendications précédentes,
**caractérisé en ce que**
l'activité de clignotant d'un objet est surveillée avec un capteur de caméra, et qu'il en est dérivé une intention du conducteur de cet objet de changer de voie de circulation.

7. Procédé selon une des revendications précédentes,
**caractérisé en ce**
**qu'**une accélération de consigne est affectée au moins à un objet, l'accélération de consigne étant déterminée en fonction de la distance et de la vitesse relative par rapport au véhicule.

8. Procédé selon une des revendications précédentes,
**caractérisé en ce que**
l'objet ayant l'accélération de consigne la plus faible ou la plus négative est évalué comme l'objet avec la pertinence la plus élevée, et **en ce que** la régulation est effectuée sur l'objet ayant la pertinence la plus élevée.

9. Véhicule automobile avec un système d'assistance au conducteur pour la régulation adaptative de la vitesse longitudinale, la régulation comprenant un procédé selon une des revendications 1-8.
